# EUROPÄISCHE PATENTSCHRIFT

(11) **EP 3 623 632 B1**
(45) Veröffentlichungstag und Bekanntmachung des Hinweises auf die Patenterteilung: **15.09.2021**
(21) Anmeldenummer: 19199579.4
(22) Anmeldetag: 25.09.2019
(51) Int. Cl.: F04C 29/00, F04D 17/16, F04D 19/04, F04D 29/60, F16M 1/04

(54) **MODULARES RAHMENSYSTEM FÜR VAKUUMPUMPEN**
MODULAR FRAME SYSTEM FOR VACUUM PUMPS
SYSTÈME DE CADRE MODULAIRE POUR POMPES À VIDE

(43) Veröffentlichungstag der Anmeldung: 18.03.2020
(73) Patentinhaber: PFEIFFER VACUUM GMBH, 35614 Asslar (DE)
(72) Erfinder: Ehresmann, Christian, 35794 Mengerskirchen (DE); Huber, Peter, 35510 Butzbach (DE)
(74) Vertreter: Manitz Finsterwald Patent- und Rechtsanwaltspartnerschaft mbB

(56) Entgegenhaltungen:
- DE-A1-102017 120 655
- DE-U1-202015 005 199
- JP-A- H05 113 180
- US-A1- 2010 326 599

## Beschreibung

Die Erfindung betrifft ein modulares Rahmensystem für Vakuumpumpen sowie ein Vakuumsystem mit wenigstens zwei Vakuumpumpen und zumindest einem erfindungsgemäßen modularen Rahmensystem.

In der Praxis werden Vakuumpumpen entweder einzeln oder gemeinsam mit einer oder mehreren weiteren Vakuumpumpen eingesetzt. Ein Verbund aus mehreren Vakuumpumpen wird auch als Pumpstand bezeichnet. In einem Pumpstand sind die Vakuumpumpen meist übereinander angeordnet, sodass Maßnahmen erforderlich sind, um das Gewicht der oberen Pumpe oder der oberen Pumpen tragen zu können.

Vakuumpumpen besitzen häufig einen äußeren Rahmen, der die einzelnen Funktionselemente der Pumpe aufnimmt. Nicht alle Funktionsteile müssen dabei innerhalb des Rahmens angeordnet sein. Manche Funktionsmodule, beispielsweise elektrische Steuer-, Regelungs- und Versorgungskomponenten enthaltende Schaltschränke, können sich auch außerhalb des Rahmens befinden und dabei von dem Rahmen getragen sein.

Bei den Rahmen von Einzelpumpen handelt es sich häufig um im Wesentlichen geschlossene Gehäuse, die aus Blechelementen bestehen. Derartige Gehäuse sind kostengünstig, haben ein geringes Gewicht und können die Anforderungen einer Einzelpumpe problemlos erfüllen.

Für Pumpstände mit mehreren Vakuumpumpen werden meist massive Rahmen eingesetzt, bei denen es sich nicht um geschlossene Gehäuse handelt, sondern bei denen mehrere stabile stabförmige Tragelemente zu einer Art Trag- oder Gitterstruktur zusammengesetzt sind, die auf dem Boden steht und an der die den Pumpstand bildenden Vakuumpumpen abgestützt sind. Derartige massive Tragrahmen sind erforderlich, da die erwähnten leichten Blechgehäuse von Einzelpumpen das Gewicht einer zusätzlichen Pumpe nicht tragen könnten. Einzelpumpen von vornherein mit massiven Tragrahmen auszustatten, bedeutete allerdings eine Überdimensionierung mit unnötigen Kosten, da im Falle eines Einsatzes als Einzelpumpe die von einem derartigen Tragrahmen gebotene Stabilität und Tragfähigkeit überhaupt nicht erforderlich sind.

Ein Rahmensystem mit den Merkmalen des Oberbegriffs des Anspruchs 1 ist aus DE 20 2015 005 199 U1 und JPH 05 113 180 bekannt.

Aufgabe der Erfindung ist es daher, eine einfache und kostengünstige Möglichkeit für den Betrieb von Vakuumpumpen zu schaffen, die insbesondere im Hinblick auf die mechanische Stabilität den Anforderungen von Vakuumpumpen sowohl im Betrieb als Einzelpumpe als auch in einem mehrere Vakuumpumpen umfassenden Pumpstand gerecht wird.

Gemäß einem Aspekt der Erfindung erfolgt die Lösung dieser Aufgabe durch ein modulares Rahmensystem für Vakuumpumpen mit einem Basisrahmen für eine erste Vakuumpumpe, und mit einem separaten, zusätzlich zu dem Basisrahmen vorgesehenen Zusatzrahmen für eine zweite Vakuumpumpe, wobei der Basisrahmen sowohl für einen Pumpbetrieb der ersten Vakuumpumpe ohne den Zusatzrahmen und ohne die zweite Vakuumpumpe als auch für einen gemeinsamen Pumpbetrieb beider Vakuumpumpen ausgebildet ist, bei dem die beiden Vakuumpumpen einen Pumpstand bilden und vakuumtechnisch miteinander verbunden sind, und wobei der Basisrahmen und der Zusatzrahmen derart ausgebildet sind, dass zur Bildung des Pumpstands der Zusatzrahmen am Basisrahmen und die zweite Vakuumpumpe am Zusatzrahmen abstützbar ist, wobei ein der ersten Vakuumpumpe zugeordnetes Funktionsmodul und ein der zweiten Vakuumpumpe zugeordnetes Funktionsmodul in unterschiedlichen vertikalen Lagen an dem Zusatzrahmen befestigt und jeweils mit der zugeordneten Vakuumpumpe verbunden sind. Zumindest bei einem der Funktionsmodule, bevorzugt bei beiden Funktionsmodulen, handelt es sich um einen Schaltschrank mit elektrischen und/oder elektronischen Komponenten zur Steuerung, Regelung und/oder Versorgung der jeweiligen Vakuumpumpe. Die Befestigungsmöglichkeiten, welche der Zusatzrahmen für die Funktionsmodule bildet, sind bevorzugt derart vorgesehen, dass die Funktionsmodule vertikal übereinander am Zusatzrahmen befestigt werden können.

In Abhängigkeit von den jeweiligen Positionen der Vakuumpumpen und der Funktionsmodule kann die Verbindung zwischen Vakuumpumpe und zugeordnetem Funktionsmodul durch eine oder mehrere elektrische Leitungen und/oder durch Steckverbindungen erfolgen.

Gemäß einem weiteren Aspekt der Erfindung erfolgt die Lösung der Aufgabe durch ein Vakuumsystem mit wenigstens einer ersten Vakuumpumpe und wenigstens einer zweiten Vakuumpumpe und mit zumindest einem modularen Rahmensystem wie hierin offenbart, wobei der Basisrahmen und der Zusatzrahmen des Rahmensystems dazu ausgebildet sind, zusammen mit den Vakuumpumpen einen Pumpstand zu bilden, bei dem die Vakuumpumpen vakuumtechnisch miteinander verbunden sind und der Zusatzrahmen am Basisrahmen und die zweite Vakuumpumpe am Zusatzrahmen abgestützt ist.

Die Erfindung betrifft auch ein Vakuumsystem der vorstehend genannten Art, bei dem die beiden Vakuumpumpen und das Rahmensystem zu einem Pumpstand zusammengesetzt sind, d.h. die Erfindung betrifft nicht nur die vorstehend genannten einzelnen Bestandteile des Vakuumsystems, sondern auch einen betriebsfähigen Pumpstand, bei dem die genannten einzelnen Bestandteile in bestimmungsgemäßer Weise zu einem Pumpstand zusammengesetzt sind.

Unter einer vakuumtechnischen Verbindung zwischen zwei oder mehr Vakuumpumpen ist eine Verbindung derart zu verstehen, dass die Pumpen zusammenwirken, um eine jeweilige Pumpwirkung zu erbringen. Dabei können die Pumpen in Reihe oder parallelgeschaltet sein. Die Anzahl der vakuumtechnisch miteinander verbundenen Pumpen ist grundsätzlich beliebig. Die Pumpen können beispielsweise kaskadenartig miteinander verbunden sein. Eine vakuumtechnische Verbindung zweier Vakuumpumpen kann beispielsweise dazu dienen, dass die eine Vakuumpumpe eine Vorpumpe der anderen Vakuumpumpe bildet.

Das erfindungsgemäße modulare Rahmensystem ermöglicht eine flexible Anpassung an die jeweiligen Stabilitätsanforderungen. Wenn in einer bestimmten Anwendung für eine Vakuumpumpe ein Einzelbetrieb, also kein Betrieb im Rahmen eines Pumpstandes, vorgesehen ist, dann genügt es, die Pumpe mit dem Basisrahmen zu versehen. Je nach Pumpentyp kann eine Vakuumpumpe bereits bei der Herstellung mit dem Basisrahmen versehen sein, mit dem die Pumpe dann dauerhaft verbunden bleibt. Alternativ kann eine Pumpe bei Bedarf und erst für den eigentlichen Pumpbetrieb mit dem Basisrahmen versehen werden. Der Basisrahmen kann alle Anforderungen dieser Einzelpumpe erfüllen und stellt eine kostengünstige, nur ein relativ geringes Gewicht aufweisende Ausrüstung einer Vakuumpumpe dar.

Darüber hinaus gestattet es das erfindungsgemäße modulare Rahmensystem, eine mit dem Basisrahmen versehene Vakuumpumpe zusammen mit einer oder mehreren weiteren Vakuumpumpen in einem Pumpstand einzusetzen. In dieser Pumpstand-Konfiguration kommt der erfindungsgemäße Zusatzrahmen zum Einsatz. Der Basisrahmen und der Zusatzrahmen sind derart aufeinander abgestimmt, dass der Zusatzrahmen am Basisrahmen abgestützt werden kann. Die mechanische Stabilität und Tragfähigkeit des Basisrahmens werden durch den Zusatzrahmen erhöht. Hierdurch kann das Gewicht zumindest einer weiteren Vakuumpumpe getragen werden. Diese weitere Vakuumpumpe - hier auch als zweite Vakuumpumpe bezeichnet - stützt sich dabei am Zusatzrahmen ab.

Dabei muss sich die weitere Vakuumpumpe nicht vollständig unmittelbar am Zusatzrahmen abstützen. Ein Teil der Gewichtskraft der weiteren Vakuumpumpe kann unmittelbar von dem Basisrahmen und/oder vor der mit dem Basisrahmen versehenen Vakuumpumpe aufgenommen werden, d.h. die weitere Vakuumpumpe kann sich teilweise auch an der mit dem Basisrahmen versehenen Vakuumpumpe abstützen. Eine solche unmittelbare Abstützung der beiden Pumpen untereinander kann beispielsweise durch eine mechanische Verbindung erfolgen, die zur vakuumtechnischen Verbindung der beiden Vakuumpumpen dient. Eine vakuumtechnische Verbindung der beiden Vakuumpumpen kann allerdings auch derart erfolgen, dass zwar eine mechanische Verbindung zwischen den beiden Vakuumpumpen besteht, diese aber nicht in nennenswerter Weise zur Abstützung der einen Vakuumpumpe an der anderen Vakuumpumpe beiträgt. In einem solchen Fall ist unter einer mechanischen Verbindung zur vakuumtechnischen Verbindung der beiden Vakuumpumpen keine mechanische Abstützung im Sinne der Erfindung zu verstehen.

Das erfindungsgemäße modulare Rahmensystem ermöglicht es also, mechanische Stabilität und Tragfähigkeit in Form des Zusatzrahmens nur dann bereitzustellen, wenn dies auch erforderlich ist. Eine Überdimensionierung einer Einzelpumpe im Hinblick auf mechanische Stabilität und Tragfähigkeit wird folglich vermieden.

Das erfindungsgemäße modulare Rahmensystem ist nicht auf einen einzigen Basisrahmen und einen einzigen Zusatzrahmen beschränkt. Es können mehrere Zusatzrahmen vorgesehen sein, wobei die Zusatzrahmen derart aufeinander abgestimmt werden können, dass ein Zusatzrahmen an einem oder mehreren Zusatzrahmen abgestützt werden kann. Die Zusatzrahmen können an unterschiedliche Vakuumpumpen angepasst sein. Ein mehrere Vakuumpumpen und mehrere die erfindungsgemäßen Bestandteile des Rahmensystems bildende Rahmen können in beliebiger Weise zu einem Pumpstand kombiniert werden. Dabei müssen nicht alle Zusatzrahmen des Rahmensystems gleichzeitig zum Einsatz kommen. Der jeweilige Betreiber kann das erfindungsgemäße modulare Rahmensystem flexibel einsetzen und den oder die jeweils passenden Zusatzrahmen auswählen. Selbstverständlich können auch mehrere Basisrahmen gleichzeitig zum Einsatz kommen, wenn der Pumpstand mehrere derartige Vakuumpumpen umfasst, die jeweils mit einem Basisrahmen ausgestattet sind.

Vorteilhafte Ausführungsformen der Erfindung sind auch in den abhängigen Ansprüchen, der Beschreibung sowie der Zeichnung angegeben.

In dem Pumpstand, also wenn die wenigstens zwei Vakuumpumpen, der Basisrahmen und der Zusatzrahmen zu einem betriebsfähigen Pumpstand zusammengesetzt sind, kann der Zusatzrahmen ausschließlich am Basisrahmen abgestützt sein. Eine Abstützung des Zusatzrahmens auch am Boden erfolgt hierbei also nicht. Alternativ oder zusätzlich kann in dem Pumpstand die zweite Vakuumpumpe ausschließlich am Zusatzrahmen abgestützt sein. Wie eingangs bereits erwähnt, ist hierdurch eine mechanische Verbindung zwischen den beiden Vakuumpumpen, die insbesondere zur vakuumtechnischen Verbindung zwischen den Pumpen dient, alternativ oder zusätzlich aber auch anderen Zwecken dienen kann, nicht ausgeschlossen, wenn diese mechanische Verbindung nicht in nennenswerter Weise zur Abstützung der einen Vakuumpumpe an der anderen Vakuumpumpe beiträgt.

In anderen Ausführungsbeispielen kann vorgesehen sein, dass in dem Pumpstand der Basisrahmen ausschließlich direkt am Boden oder ausschließlich an der am Boden abgestützten ersten Vakuumpumpe abgestützt ist. Es kann also vorgesehen sein, dass die Abstützung am Boden ausschließlich über den Basisrahmen erfolgt und die erste Vakuumpumpe ausschließlich durch den Basisrahmen getragen ist. Der Basisrahmen kann hierbei mit Standfüßen versehen sein, wobei alternativ oder zusätzlich der Basisrahmen mit Fahrrollen versehen sein kann.

Alternativ kann der Basisrahmen derart auf die erste Vakuumpumpe abgestimmt sein, dass sich diese selbst am Boden abstützt und der Basisrahmen sich folglich ausschließlich an der am Boden abgestützten ersten Vakuumpumpe abstützt.

Insbesondere dann, wenn der Basisrahmen am Boden und die erste Vakuumpumpe am Basisrahmen abgestützt ist, ist bevorzugt zwischen der ersten Vakuumpumpe und dem Basisrahmen eine Schwingungsentkoppelung vorgesehen. Beispielsweise kann die erste Vakuumpumpe mit jeweils als Schwingungsdämpfer oder Pufferelement ausgebildeten oder mit derartigen Dämpfern bzw. Elementen versehenen Standfüßen am Basisrahmen abgestützt sein und z.B. auf hierfür vorgesehenen Standflächen oder Standabschnitten, die am Basisrahmen ausgebildet sind, stehen.

Alternativ zu den beiden vorstehend genannten Möglichkeiten kann erfindungsgemäß auch vorgesehen sein, dass der Basisrahmen und die erste Vakuumpumpe derart aufeinander abgestimmt sind, dass die Abstützung am Boden sowohl durch die erste Vakuumpumpe selbst als auch durch den Basisrahmen erfolgt.

Die vorstehend erläuterten Möglichkeiten zur Abstützung von erster Vakuumpumpe und Basisrahmen am Boden gelten selbstverständlich nicht nur für die Pumpstand-Konfiguration, sondern auch dann, wenn die erste Vakuumpumpe zusammen mit ihrem Basisrahmen als Einzelpumpe ohne Zusatzrahmen und ohne weitere Vakuumpumpe verwendet wird.

Gemäß weiteren Ausführungsbeispielen der Erfindung ist in dem Pumpstand die zweite Vakuumpumpe vertikal oberhalb der ersten Vakuumpumpe angeordnet.

Unter einer derartigen vertikalen Übereinanderanordnung der beiden Vakuumpumpen ist nicht zu verstehen, dass die beiden Vakuumpumpen sich lediglich auf unterschiedlichen Höhenniveaus befinden, dabei aber nebeneinander angeordnet sind.

In manchen Ausführungsbeispielen der Erfindung sind in dem Pumpstand der Basisrahmen und der am Basisrahmen abgestützte Zusatzrahmen derart relativ zueinander angeordnet, dass die beiden Rahmen in vertikaler Richtung einander überlappen oder ineinander geschachtelt sind. Insbesondere kann vorgesehen sein, dass der eine Rahmen, bevorzugt der Zusatzrahmen, auf den anderen Rahmen aufgesteckt oder aufgeschoben oder über den anderen Rahmen gesteckt, geschoben oder gestülpt ist. Der Basisrahmen und der Zusatzrahmen sind in diesen Ausführungsbeispielen also nicht lediglich aufeinander stapelbar. Durch die in diesen Ausführungsbeispielen vorgesehene Überlappung oder Schachtelung der beiden Rahmen kann der Zusatzrahmen eine beispielsweise innere oder äußere Stabilitätsstruktur für den Basisrahmen bilden, sodass dessen Stabilität und Tragfähigkeit durch den Zusatzrahmen erhöht werden. Dabei kann sich der eine Rahmen vollständig innerhalb des anderen Rahmens befinden. Dies ist aber nicht zwingend, denn es kann auch nur eine teilweise Überlappung oder Schachtelung der beiden Rahmen vorgesehen sein.

Der Basisrahmen kann als ein Gehäuse ausgebildet sein, in welchem die erste Vakuumpumpe angeordnet ist. Dabei können das Gehäuse und die erste Vakuumpumpe miteinander verbunden sein, wobei die Verbindung zwischen dem Gehäuse und der ersten Vakuumpumpe eine Schwingungsentkopplung umfasst. Das Gehäuse kann ausschließlich am Boden abgestützt sein und die erste Vakuumpumpe kann sich ausschließlich an diesem Gehäuse, also nicht direkt am Boden, abstützen. In manchen Ausführungsformen umfasst der Basisrahmen ein mehrere tafelförmige Blechelemente umfassendes, insbesondere quaderförmiges, Gehäuse für die erste Vakuumpumpe, wobei der Zusatzrahmen eine Mehrzahl von miteinander verbundenen stabförmigen Profilelementen umfasst, die in dem Pumpstand an dem Gehäuse, insbesondere an den Blechelementen des Gehäuses, lösbar befestigt sind. Der Zusatzrahmen kann dabei ausschließlich an dem Gehäuse befestigbar sein. Dies ist jedoch nicht zwingend. Es ist auch möglich, dass der Zusatzrahmen an der ersten Vakuumpumpe befestigbar ist, beispielsweise mittels Befestigungsschrauben, die sich durch das Gehäuse hindurch in Gewindeaufnahmen hinein erstrecken, die an der ersten Vakuumpumpe ausgebildet sind.

In weiteren Ausführungsbeispielen der Erfindung weist der Zusatzrahmen einen Aufnahmeraum für die erste Vakuumpumpe und einen Abstützbereich für die zweite Vakuumpumpe auf, wobei der Abstützbereich sich vertikal oberhalb des Aufnahmeraumes befindet.

Bei der ersten Vakuumpumpe, für welche der Basisrahmen vorgesehen ist, handelt es sich beispielsweise um eine Schraubenpumpe, insbesondere um eine trockene Schraubenpumpe.

Bei der zweiten Vakuumpumpe, die im Pumpstand am Zusatzrahmen abgestützt ist, handelt es sich insbesondere um eine Wälzkolbenpumpe.

In manchen Ausführungsbeispielen der Erfindung kann vorgesehen sein, dass in dem Pumpstand die erste Vakuumpumpe eine Vorpumpe für die zweite Vakuumpumpe ist.

In einem Ausführungsbeispiel umfasst der Pumpstand als erste Vakuumpumpe eine Schraubenpumpe, die als Vorpumpe für eine die zweite Vakuumpumpe bildende Wälzkolbenpumpe fungiert, wobei die Wälzkolbenpumpe vertikal oberhalb der Schraubenpumpe angeordnet und am Zusatzrahmen abgestützt ist, der sich am Basisrahmen der Schraubenpumpe abstützt.

Die Erfindung wird im Folgenden beispielhaft unter Bezugnahme auf die Zeichnung beschrieben. Es zeigen:
- Fig. 1: ein erfindungsgemäßes Vakuumsystem in Form eines Pumpstands in einer perspektivischen Ansicht,
- Fig. 2: eine Seitenansicht des Pumpstands von Fig. 1,
- Fig. 3: eine Draufsicht auf den Pumpstand von Fig. 1,
- Fig. 4: eine perspektivische Ansicht eines Zusatzrahmens des Pumpstands von Fig. 1 und
- Fig. 5: weitere Ansichten des Zusatzrahmens von Fig. 4.

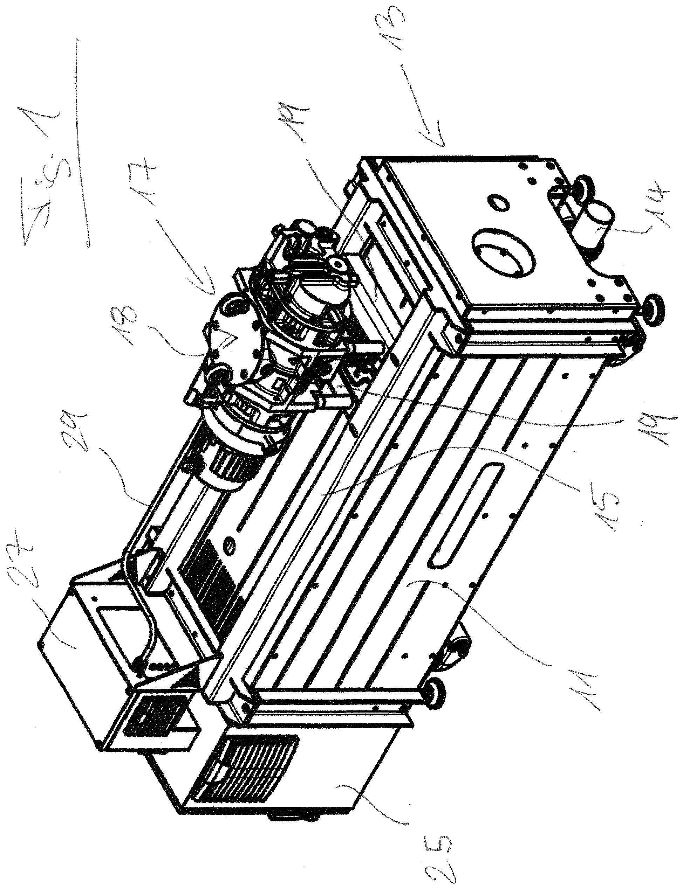

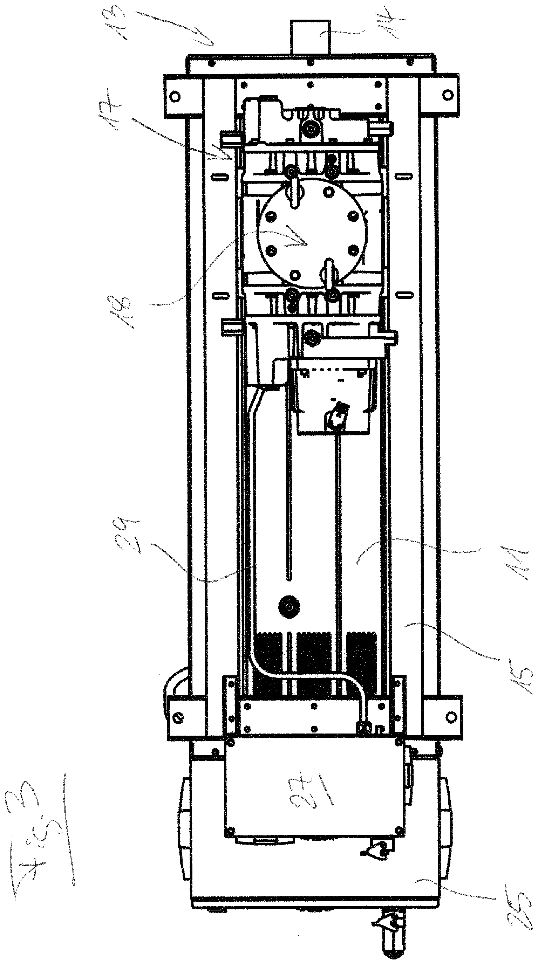

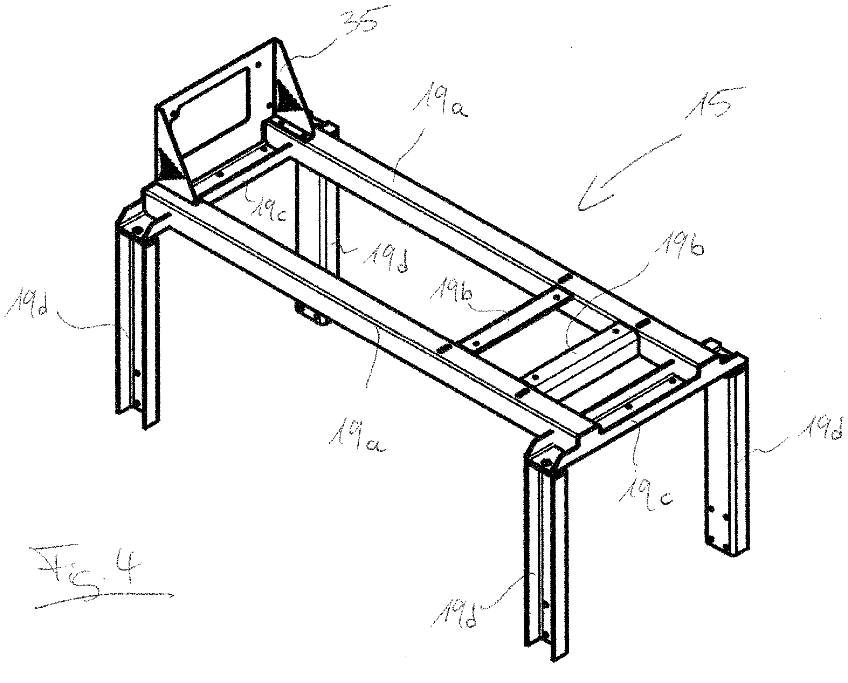

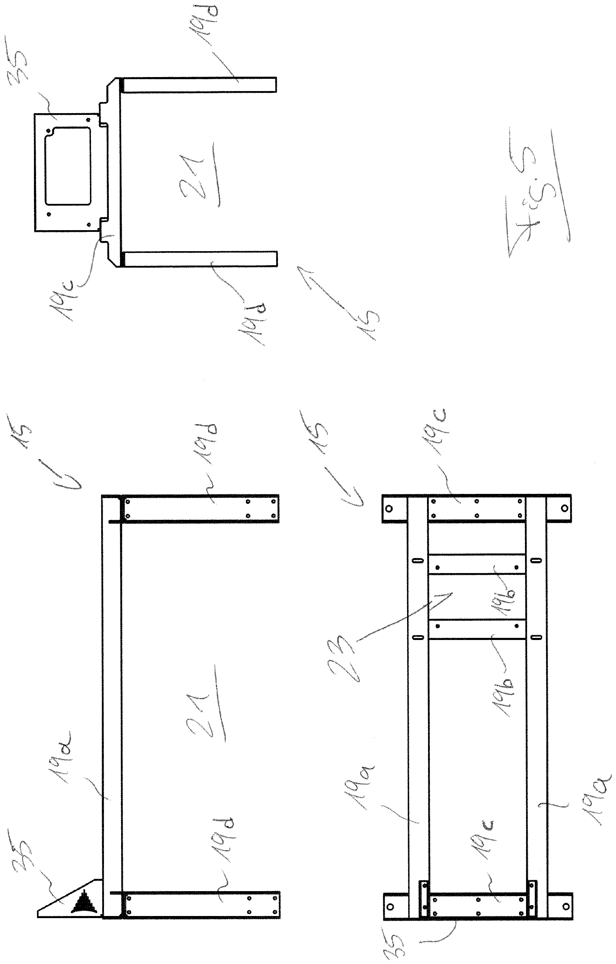

Der in den Fig. 1, 2 und 3 dargestellte Vakuumpumpstand umfasst eine erste Vakuumpumpe 13, eine zweite Vakuumpumpe 17, ein modulares Rahmensystem bestehend aus einem Basisrahmen 11 in Form eines Gehäuses für die erste Vakuumpumpe 13 sowie aus einem Zusatzrahmen 15, der aus mehreren stabförmigen Profilelementen 19 (vgl. auch Fig. 4 und 5) zusammengesetzt ist, und zwei Schaltschränke 25, 27 für die beiden Vakuumpumpen 13, 17.

Bei der ersten Vakuumpumpe 13 handelt es sich in diesem Ausführungsbeispiel um eine trockene Schraubenpumpe, die als Vorpumpe für die zweite Pumpe 17 dient, die hier von einer Wälzkolbenpumpe gebildet wird. Der Einlass 18 der Wälzkolbenpumpe 17 befindet sich an deren Oberseite und ist in der Darstellung der Fig. 1, 2 und 3 durch eine Abdeckung verschlossen. Mit dem Einlass 18 der Wälzkolbenpumpe 17 ist während eines bestimmungsgemäßen Pumpbetriebs ein zu evakuierender Gegenstand verbunden, beispielsweise eine Prozesskammer, die hier nicht dargestellt ist.

Gelegentlich wird die Gesamtanordnung aus Pumpen einerseits und zu evakuierendem Gegenstand andererseits als Pumpstand bezeichnet. Im Rahmen der für die vorliegende Offenbarung verwendeten Terminologie gehört der zu evakuierende Gegenstand nicht zum Pumpstand. Im Ausführungsbeispiel der Fig. 1, 2 und 3 gehören zum Pumpstand die hier dargestellten Bestandteile. Zu diesen Bestandteilen gehören - wie erwähnt - neben den beiden Pumpen 13, 17 der Basisrahmen 11 der Schraubenpumpe 13, der Zusatzrahmen 15 für die Wälzkolbenpumpe 17 sowie die beiden Schaltschränke 25, 27. Dabei ist der untere Schaltschrank 25 der unteren Vakuumpumpe, also der Schraubenpumpe 13 und somit der Vorpumpe, zugeordnet, während der obere Schaltschrank 27 der oberen Vakuumpumpe, nämlich der Wälzkolbenpumpe 17, zugeordnet ist. Die Wälzkolbenpumpe 17 ist mit ihrem Schaltschrank 27 durch eine elektrische Leitung 29 verbunden. Auch die Schraubenpumpe 13 kann mit ihrem Schaltschrank 25 über eine oder mehrere Leitungen verbunden sein. Alternativ oder zusätzlich kann die Verbindung aufgrund der räumlichen Nähe zwischen Schraubenpumpe 13 und Schaltschrank 25 durch eine oder mehrere elektrische Steckverbindungen erfolgen.

Die beiden Schaltschränke 25, 27 bilden Funktionsmodule im Sinne der vorliegenden Offenbarung.

Der gesamte Pumpstand gemäß Fig. 1, 2 und 3 ist am Boden oder an einem beliebigen anderen, hier nicht dargestellten Unterteil, das den gesamten Pumpstand trägt, über den Basisrahmen 11 abgestützt. Hierzu ist der Basisrahmen 11 mit Standfüßen 31 versehen. Um entweder den Basisrahmen 11 samt Schraubenpumpe 13 alleine oder den gesamten Pumpstand verfahren zu können, ist der Basisrahmen 11 außerdem mit Fahrrollen 33 versehen. Wenn der Basisrahmen 11 und somit der gesamte Pumpstand auf den Standfüßen 31 steht, sind die Fahrrollen 33 passiv. Um den Basisrahmen 11 und somit den gesamten Pumpstand verfahren zu können, werden entweder die Standfüße 31 in eine passive Stellung überführt oder die Fahrrollen 33 werden in eine aktive Fahrstellung überführt oder es werden diese beiden Maßnahmen durchgeführt. Alle diese Varianten sind grundsätzlich möglich.

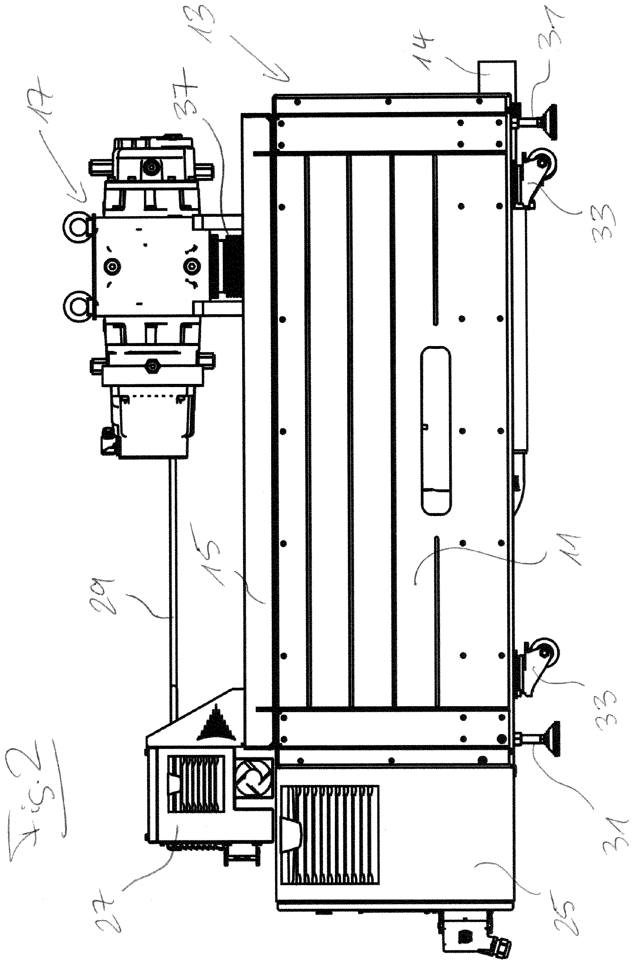

Die Abstützung der Schraubenpumpe 13 erfolgt in diesem Ausführungsbeispiel also über den bereits erwähnten Basisrahmen 11, der hier als im Wesentlichen quaderförmiges Gehäuse ausgebildet ist und eine Mehrzahl von tafelförmigen Blechelementen umfasst, welche die Schraubenpumpe 13 umgeben. Die Seitenwände dieses Gehäuses 11 reichen nicht bis zum Boden, wie insbesondere der Fig. 2 zu entnehmen ist. Die Schraubenpumpe 13 ist also innerhalb des Gehäuses 11 aufgenommen, liegt also in dem von dem Gehäuse 11 gebildeten Basisrahmen. Wie an anderer Stelle bereits erwähnt, kann zwischen der Schraubenpumpe 13 und dem Gehäuse 11 eine Schwingungsentkoppelung vorgesehen sein, beispielsweise in Form von entsprechend ausgebildeten, nicht dargestellten Füßen oder Puffern der Schraubenpumpe 13.

Die Schraubenpumpe 13 kann im Einzelbetrieb verwendet werden, ohne als Vorpumpe für eine andere Pumpe zu dienen. Wenn die Schraubenpumpe 13 als Einzelpumpe im Einsatz ist, ist sie ebenfalls mit dem das Gehäuse bildenden Basisrahmen 11 versehen. Dieses Blechgehäuse 11 ist kostengünstig herstellbar und hat ein geringes Gewicht. Für den Einzelbetrieb der Schraubenpumpe 13 wird somit eine mechanische Überdimensionierung vermieden.

Damit der Basisrahmen 11 im Pumpstand gemäß den Fig. 1, 2 und 3 das zusätzliche Gewicht der Wälzkolbenpumpe tragen kann und hierzu die notwendige mechanische Stabilität aufweist, ist zur Bildung des Pumpstands der Zusatzrahmen 15 auf den Basisrahmen 11 aufschiebbar. In den Profilelementen 19 des Zusatzrahmens 15 sind Öffnungen ausgebildet, über welche der Zusatzrahmen 15 mit dem Basisrahmen 11 verschraubt werden kann, um eine stabile und verwindungssteife Gesamtkonfiguration zu bilden.

Eine derartige Verschraubung oder andere Befestigung des Zusatzrahmens 15 am Basisrahmen 11 mittels separater Befestigungselemente ist aber nicht zwingend. Je nach konkreter Ausgestaltung von Zusatzrahmen 15 und Basisrahmen 11 bzw. der miteinander zusammenwirkenden Bereiche der beiden Rahmen 11, 15 kann es genügen, wenn die beiden Rahmen 11, 15 einfach in bestimmungsgemäßer Weise zusammengesetzt werden, indem beispielsweise - wie im Ausführungsbeispiel der Fig. 1, 2 und 3 - der eine Rahmen über den anderen Rahmen geschoben wird.

An dem Zusatzrahmen 15 ist die Wälzkolbenpumpe 17 abgestützt, d.h. die Wälzkolbenpumpe 17 wird nicht unmittelbar von dem Basisrahmen 11 oder von der Schraubenpumpe 13 getragen. Der Zusatzrahmen 15 ist mit zwei vergleichsweise kurzen Profilelementen 19b versehen, die zwischen zwei sich in Längsrichtung des Basisrahmens 11 erstreckenden Längsprofilen 19a angeordnet sind. Auf diesen Querprofilen 19b ruht die Wälzkolbenpumpe 17. Diese Abstützung der Wälzkolbenpumpe 17 am Zusatzrahmen 15 kann schwingungsentkoppelt sein.

In dem auf diese Weise gebildeten Pumpstand ist die Wälzkolbenpumpe 17 an ihrem an der Unterseite ausgebildeten Auslass mit dem Einlass der Schraubenpumpe 13 vakuumtechnisch verbunden, in dem hier dargestellten Ausführungsbeispiel durch einen Balg 37. Die Art und Weise der vakuumtechnischen Verbindung zweier mit dem erfindungsgemäßen modularen Rahmensystem eingesetzter Vakuumpumpen ist natürlich von deren konkreter Ausgestaltung abhängig.

Das von dem nicht dargestellten zu evakuierenden Gegenstand abgepumpte Gas verlässt den Pumpstand über einen Auslass 14 der Schraubenpumpe 13.

Der Zusatzrahmen 15 dient außerdem zur Anbringung der bereits erwähnten Schaltschränke 25, 27. Hierzu ist der Zusatzrahmen 15 an einem Ende mit einer Halterung 35 versehen, die von derjenigen Ebene des Zusatzrahmens 15 nach oben absteht, die durch die beiden vorstehend erwähnten Längsprofile 19a definiert ist, zwischen denen sich die beiden Querprofile 19b zur Abstützung der Wälzkolbenpumpe 17 erstrecken.

An dieser Halterung 35 ist der Schaltschrank 27 der Wälzkolbenpumpe 17 befestigt, beispielsweise durch Verschrauben.

Unterhalb des Schaltschranks 27 für die Wälzkolbenpumpe 17 befindet sich der Schaltschrank 25 der Schraubenpumpe 13. Dieser Schaltschrank 25 ist außen an einem oder mehreren derjenigen Profilelemente 19c, 19d befestigt, die einen der beiden, in Form eines nach unten offenen "U" vorgesehenen Rahmenteile bilden, welche jeweils ein oberes Querprofil 19c und zwei sich von diesem vertikal nach unten erstreckende Vertikalprofile 19d umfassen.

Wie insbesondere die Längsseitenansicht oben links, die Draufsicht unten links sowie die Stirnseitenansicht oben rechts in Fig. 5 zeigen, sind durch den Zusatzrahmen 15 ein Aufnahmeraum 21 für die erste Vakuumpumpe - hier die Schraubenpumpe 13 - samt Basisrahmen 11 unterhalb der durch die Längsprofile 19a und die Querprofile 19b definierten Ebene sowie oberhalb dieser Ebene ein von diesen Profilen 19a, 19b gebildeter Abstützbereich 23 für die zweite Vakuumpumpe 17 - hier die Wälzkolbenpumpe - gebildet.

Der modulare Aufbau des von dem Zusatzrahmen 15 und dem Basisrahmen 11 gebildeten Rahmensystems ermöglicht es, einen Pumpstand von hoher mechanischer Stabilität und Tragfähigkeit zu schaffen, bei dem sich die obere Pumpe an der unteren Pumpe oder an dem Basisrahmen 11 der unteren Pumpe abstützen kann, ohne dass im Fall eines Einzelbetriebs der unteren Pumpe diese mit einem überdimensionierten Rahmen ausgestattet sein muss.

### Bezuqszeichenliste

- 11: Basisrahmen, Gehäuse
- 13: Erste Vakuumpumpe, Vorpumpe, Schraubenpumpe
- 14: Auslass
- 15: Zusatzrahmen
- 17: Zweite Vakuumpumpe, Wälzkolbenpumpe
- 18: Einlass
- 19a: Profilelement
- 19b: Profilelement
- 19c: Profilelement
- 19d: Profilelement
- 21: Aufnahmeraum
- 23: Abstützbereich
- 25: Funktionsmodul, Schaltschrank
- 27: Funktionsmodul, Schaltschrank
- 29: Leitung
- 31: Standfuß
- 33: Fahrrolle
- 35: Halterung
- 37: Balg

## Patentansprüche

1. Modulares Rahmensystem für Vakuumpumpen,
mit einem Basisrahmen (11) für eine erste Vakuumpumpe (13), und mit einem separaten, zusätzlich zu dem Basisrahmen (11) vorgesehenen Zusatzrahmen (15) für eine zweite Vakuumpumpe (17),
wobei der Basisrahmen (11) sowohl für einen Pumpbetrieb der ersten Vakuumpumpe (13) ohne den Zusatzrahmen (15) und ohne die zweite Vakuumpumpe (17) als auch für einen gemeinsamen Pumpbetrieb beider Vakuumpumpen (13, 17) ausgebildet ist, bei dem die beiden Vakuumpumpen (13, 17) einen Pumpstand bilden und vakuumtechnisch miteinander verbunden sind, und
wobei der Basisrahmen (11) und der Zusatzrahmen (15) derart ausgebildet sind, dass zur Bildung des Pumpstands der Zusatzrahmen (15) am Basisrahmen (11) und die zweite Vakuumpumpe (17) am Zusatzrahmen (15) abstützbar ist,
**dadurch gekennzeichnet,**
**dass** ein der ersten Vakuumpumpe (13) zugeordnetes Funktionsmodul (25), insbesondere ein Schaltschrank, und ein der zweiten Vakuumpumpe (17) zugeordnetes Funktionsmodul (27), insbesondere ein Schaltschrank, in unterschiedlichen vertikalen Lagen, insbesondere vertikal übereinander, an dem Zusatzrahmen (15) befestigt und jeweils mit der zugeordneten Vakuumpumpe (13, 17) verbindbar sind, insbesondere durch eine oder mehrere elektrische Leitungen (29) und/oder Steckverbindungen.

2. Vakuumsystem mit wenigstens einer ersten Vakuumpumpe (13) und wenigstens einer zweiten Vakuumpumpe (17) und mit zumindest einem modularen Rahmensystem nach Anspruch 1,
wobei der Basisrahmen (11) und der Zusatzrahmen (15) des Rahmensystems dazu ausgebildet sind, zusammen mit den Vakuumpumpen (13, 17) einen Pumpstand zu bilden, bei dem die Vakuumpumpen (13, 17) vakuumtechnisch miteinander verbunden sind und der Zusatzrahmen (15) am Basisrahmen (11) und die zweite Vakuumpumpe (17) am Zusatzrahmen (15) abgestützt ist.

3. Vakuumsystem nach Anspruch 2, bei dem die beiden Vakuumpumpen (13, 17) und das Rahmensystem zu einem Pumpstand zusammengesetzt sind.

4. System nach einem der vorhergehenden Ansprüche,
wobei in dem Pumpstand der Zusatzrahmen (15) ausschließlich am Basisrahmen (11) abgestützt ist und/oder wobei die zweite Vakuumpumpe (17) ausschließlich am Zusatzrahmen (15) abgestützt ist.

5. System nach einem der vorhergehenden Ansprüche,
wobei in dem Pumpstand der Basisrahmen (11) ausschließlich direkt am Boden oder ausschließlich an der am Boden abgestützten ersten Vakuumpumpe (13) abgestützt ist.

6. System nach einem der vorhergehenden Ansprüche,
wobei in dem Pumpstand die zweite Vakuumpumpe (17) vertikal oberhalb der ersten Vakuumpumpe (13) angeordnet ist.

7. System nach einem der vorhergehenden Ansprüche,
wobei in dem Pumpstand der Basisrahmen (11) und der am Basisrahmen (11) abgestützte Zusatzrahmen (15) derart relativ zueinander angeordnet sind, dass die beiden Rahmen (11, 15) in vertikaler Richtung einander überlappen oder ineinander geschachtelt sind, wobei insbesondere der eine Rahmen (15, 11), bevorzugt der Zusatzrahmen (15), auf den anderen Rahmen (11, 15) aufgesteckt oder aufgeschoben oder über den anderen Rahmen (11, 15) gesteckt, geschoben oder gestülpt ist.

8. System nach einem der vorhergehenden Ansprüche,
wobei der Basisrahmen als ein Gehäuse (11) ausgebildet ist, in welchem die erste Vakuumpumpe (13) angeordnet ist, wobei insbesondere das Gehäuse (11) und die erste Vakuumpumpe (13) miteinander verbunden sind und die Verbindung zwischen dem Gehäuse (11) und der ersten Vakuumpumpe (13) eine Schwingungsentkoppelung umfasst.

9. System nach einem der vorhergehenden Ansprüche,
wobei der Basisrahmen ein mehrere tafelförmige Blechelemente umfassendes, insbesondere quaderförmiges, Gehäuse (11) für die erste Vakuumpumpe (13) umfasst, und wobei der Zusatzrahmen (15) eine Mehrzahl von miteinander verbundenen stabförmigen Profilelementen (19) umfasst, die in dem Pumpstand an dem Gehäuse (11), insbesondere an den Blechelementen des Gehäuses (11), lösbar befestigt sind.

10. System nach einem der vorhergehenden Ansprüche,
wobei der Zusatzrahmen (15) einen Aufnahmeraum (21) für die erste Vakuumpumpe (13) und einen Abstützbereich (23) für die zweite Vakuumpumpe (17) aufweist, und wobei der Abstützbereich (23) sich vertikal oberhalb des Aufnahmeraumes (21) befindet.

11. System nach einem der vorhergehenden Ansprüche,
wobei die erste Vakuumpumpe (13) eine Schraubenpumpe ist, insbesondere eine trockene Schraubenpumpe, und/oder wobei die zweite Vakuumpumpe (17) eine Wälzkolbenpumpe ist.

12. System nach einem der vorhergehenden Ansprüche,
wobei in dem Pumpstand die erste Vakuumpumpe (13) eine Vorpumpe für die zweite Vakuumpumpe (17) ist.

## Claims

1. A modular frame system for vacuum pumps,
comprising a base frame (11) for a first vacuum pump (13); and
a separate additional frame (15), which is provided in addition to the base frame (11), for a second vacuum pump (17),
wherein the base frame (11) is configured both for a pump operation of the first vacuum pump (13) without the additional frame (15) and without the second vacuum pump (17) and for a joint pump operation of the two vacuum pumps (13, 17) in which the two vacuum pumps (13, 17) form a pumping station and are connected to one another in a technical vacuum manner, and
wherein the base frame (11) and the additional frame (15) are configured such that, in order to form the pumping station, the additional frame (15) can be supported at the base frame (11) and the second vacuum pump (17) can be supported at the additional frame (15),
**characterized in that**
a functional module (25) associated with the first vacuum pump (13), in particular a switch cabinet, and a functional module (27) associated with the second vacuum pump (17), in particular a switch cabinet, are fastened to the additional frame (15) in different vertical positions, in particular vertically above one another, and are each connectable to the associated vacuum pump (13, 17), in particular by one or more electrical lines (29) and/or plugin connections.

2. A vacuum system comprising at least a first vacuum pump (13); at least a second vacuum pump (17); and at least one modular frame system in accordance with claim 1,
wherein the base frame (11) and the additional frame (15) of the frame system are configured to form a pumping station together with the vacuum pumps (13, 17), in which pumping station the vacuum pumps (13, 17) are connected to one another in a technical vacuum manner, the additional frame (15) is supported at the base frame (11) and the second vacuum pump (17) is supported at the additional frame (15).

3. A vacuum system in accordance with claim 2, in which the two vacuum pumps (13, 17) and the frame system are assembled to form a pumping station.

4. A system in accordance with any one of the preceding claims, wherein, in the pumping station, the additional frame (15) is only supported at the base frame (11), and/or wherein the second vacuum pump (17) is only supported at the additional frame (15).

5. A system in accordance with any one of the preceding claims, wherein, in the pumping station, the base frame (11) is only supported directly on the ground or is only supported at the first vacuum pump (13) which is supported on the ground.

6. A system in accordance with any one of the preceding claims, wherein, in the pumping station, the second vacuum pump (17) is arranged vertically above the first vacuum pump (13).

7. A system in accordance with any one of the preceding claims, wherein, in the pumping station, the base frame (11) and the additional frame (15) supported at the base frame (11) are arranged relative to one another such that the two frames (11, 15) mutually overlap in the vertical direction or are nested in one another, wherein in particular the one frame (15, 11), preferably the additional frame (15), is plugged onto or pushed onto the other frame (11, 15) or is plugged, pushed or pulled over the other frame (11, 15).

8. A system in accordance with any one of the preceding claims,
wherein the base frame is configured as a housing (11) in which the first vacuum pump (13) is arranged, wherein in particular the housing (11) and the first vacuum pump (13) are connected to one another and the connection between the housing (11) and the first vacuum pump (13) comprises a vibration decoupling.

9. A system in accordance with any one of the preceding claims,
wherein the base frame comprises a housing (11), in particular a parallelepiped-shaped housing (11), comprising plurality of panel-shaped sheet metal elements for the first vacuum pump (13), and wherein the additional frame (15) comprises a plurality of mutually connected barshaped profile elements (19) which are releasably fastened to the housing (11), in particular to the sheet metal elements of the housing (11), in the pumping station.

10. A system in accordance with any one of the preceding claims,
wherein the additional frame (15) comprises a reception space (21) for the first vacuum pump (13) and a support region (23) for the second vacuum pump (17), and wherein the support region (23) is located vertically above the reception space (21).

11. A system in accordance with any one of the preceding claims,
wherein the first vacuum pump (13) is a screw pump, in particular a dry screw pump, and/or wherein the second vacuum pump (17) is a Roots pump.

12. A system in accordance with any one of the preceding claims, wherein, in the pumping station, the first vacuum pump (13) is a roughing pump for the second vacuum pump (17).

## Revendications

1. Système de cadre modulaire pour pompes à vide,
comportant un cadre de base (11) pour une première pompe à vide (13), et un cadre supplémentaire séparé (15), prévu en supplément au cadre de base (11), pour une deuxième pompe à vide (17),
dans lequel
le cadre de base (11) est réalisé aussi bien pour le fonctionnement en pompage de la première pompe à vide (13), sans le cadre supplémentaire (15) et sans la deuxième pompe à vide (17), que pour le fonctionnement en pompage commun des deux pompes à vide (13, 17), dans lequel les deux pompes à vide (13, 17) forment un poste de pompage et sont reliées l'une à l'autre en termes de vide, et
le cadre de base (11) et le cadre supplémentaire (15) sont réalisés de telle sorte que, pour former le poste de pompage, le cadre supplémentaire (15) peut être supporté sur le cadre de base (11) et la deuxième pompe à vide (17) peut être supportée sur le cadre supplémentaire (15),
**caractérisé en ce que**
un module fonctionnel (25), en particulier une armoire de commande, associé(e) à la première pompe à vide (13), et un module fonctionnel (27), en particulier une armoire de commande, associé(e) à la deuxième pompe à vide (17), sont fixés au cadre supplémentaire (15) dans différentes positions verticales, en particulier verticalement l'un au-dessus de l'autre, et peuvent chacun être reliés à la pompe à vide (13, 17) associée, en particulier par une ou plusieurs lignes électriques (29) et/ou connexions à fiches.

2. Système à vide comportant au moins une première pompe à vide (13) et au moins une deuxième pompe à vide (17) et comportant au moins un système de cadre modulaire selon la revendication 1,
dans lequel le cadre de base (11) et le cadre supplémentaire (15) du système de cadre sont réalisés pour former, conjointement avec les pompes à vide (13, 17), un poste de pompage dans lequel les pompes à vide (13, 17) sont reliées l'une à l'autre en termes de vide et le cadre supplémentaire (15) est supporté sur le cadre de base (11) et la deuxième pompe à vide (17) est supportée sur le cadre supplémentaire (15).

3. Système à vide selon la revendication 2,
dans lequel les deux pompes à vide (13, 17) et le système de cadre sont assemblés pour former un poste de pompage.

4. Système selon l'une des revendications précédentes,
dans lequel, dans le poste de pompage, le cadre supplémentaire (15) est supporté exclusivement sur le cadre de base (11) et/ou la deuxième pompe à vide (17) est supportée exclusivement sur le cadre supplémentaire (15).

5. Système selon l'une des revendications précédentes,
dans lequel, dans le poste de pompage, le cadre de base (11) est supporté exclusivement directement au sol ou exclusivement sur la première pompe à vide (13) supportée au sol.

6. Système selon l'une des revendications précédentes,
dans lequel, dans le poste de pompage, la deuxième pompe à vide (17) est disposée verticalement au-dessus de la première pompe à vide (13).

7. Système selon l'une des revendications précédentes,
dans laquelle, dans le poste de pompage, le cadre de base (11) et le cadre supplémentaire (15) supporté sur le cadre de base (11) sont disposés l'un par rapport à l'autre de telle sorte que les deux cadres (11, 15) se chevauchent ou sont emboîtés l'un dans l'autre dans la direction verticale, en particulier, l'un des cadres (15, 11), de préférence le cadre supplémentaire (15), étant enfiché ou enfilé sur l'autre cadre (11, 15) ou étant enfiché, enfilé ou disposé en coiffe par-dessus l'autre cadre (11, 15).

8. Système selon l'une des revendications précédentes,
dans lequel le cadre de base est réalisé sous forme de boîtier (11) dans lequel est disposée la première pompe à vide (13), en particulier le boîtier (11) et la première pompe à vide (13) étant reliés l'un à l'autre et la liaison entre le boîtier (11) et la première pompe à vide (13) comprenant un découplage vis-à-vis des vibrations.

9. Système selon l'une des revendications précédentes,
dans lequel le cadre de base comprend un boîtier (11) pour la première pompe à vide (13), qui comprend plusieurs éléments en tôle en forme de panneau et qui est en particulier de forme parallélépipédique, et le cadre supplémentaire (15) comprend une pluralité d'éléments profilés en forme de tige (19) reliés les uns aux autres, qui sont fixés de manière détachable au boîtier (11), en particulier aux éléments en tôle du boîtier (11), dans le poste de pompage.

10. Système selon l'une des revendications précédentes,
dans lequel le cadre supplémentaire (15) comprend un espace de réception (21) pour la première pompe à vide (13) et une zone de support (23) pour la deuxième pompe à vide (17), et la zone de support (23) est située verticalement au-dessus de l'espace de réception (21).

11. Système selon l'une des revendications précédentes,
dans lequel la première pompe à vide (13) est une pompe à vis, en particulier une pompe à vis sèche, et/ou la deuxième pompe à vide (17) est une pompe Roots.

12. Système selon l'une des revendications précédentes,
dans lequel, dans le poste de pompage, la première pompe à vide (13) est une pompe préliminaire pour la deuxième pompe à vide (17).
